# FASCICULE DE BREVET EUROPEEN

(11) **EP 4 472 890 B1**
(45) Date de publication et mention de la délivrance du brevet: **15.04.2026**
(21) Numéro de dépôt: 23706413.4
(22) Date de dépôt: 30.01.2023
(51) Int. Cl.: B64D 17/06, B64D 17/34, B64D 17/36, B64D 17/08, B64D 17/62

(54) **PARACHUTE À GLISSEURS SEGMENTES**
FALLSCHIRM MIT SEGMENTIERTEN SCHIEBERN
PARACHUTE WITH SEGMENTED SLIDERS

(30) Priorité: 02.02.2022 FR 2200879
(43) Date de publication de la demande: 11.12.2024
(73) Titulaire: Safran Electronics & Defense, 75015 Paris (FR)
(72) Inventeur: CHOLLOU, Ronan, 77550 MOISSY CRAMAYEL (FR)
(74) Mandataire: Casalonga
(86) Numéro de dépôt international: PCT/FR2023/050117
(87) Numéro de publication internationale: WO 2023/148446

(56) Documents cités:
- DE-C- 918 005
- FR-A1- 2 524 861
- US-A- 2 525 798
- US-A- 6 131 856
- US-A1- 2006 231 684
- US-A1- 2007 034 744
- US-B1- 7 000 872
- US-B1- 7 028 951

## Description

### Domaine technique

La présente invention concerne les parachutes, pouvant s'appliquer à différents usages tels que la descente freinée d'une charge jusqu'à sa mise à terre, notamment du matériel (cargo-parachute) ou du personnel (parachute de troupe), le ralentissement de la chute d'une charge par un parachute extracteur avant l'épanouissement du parachute servant à l'atterrissage (parachute spatial), ou encore le ralentissement d'un aéronef juste après son atterrissage (parachute-frein).

Les parachutes compatibles avec cette invention sont notamment de type hémisphérique, carré, croix, triangulaire ou tout autre type de parachute hormis les parachutes de type « aile », compte-tenu de leur cinématique d'ouverture différente, leur construction cloisonnée par des caissons avec peu de volume d'air à remplir.

La présente invention vise à constituer un parachute qui séquence de manière répétable l'épanouissement du parachute lors de son déploiement en limitant l'abaissement, c'est-à-dire la perte de hauteur pendant l'épanouissement

### Techniques antérieures

On connaît des parachutes dont les glisseurs permettent de réaliser une décélération en utilisant leur aérodynamisme de manière à ralentir et séquencer l'épanouissement de la voile du parachute lors de son déploiement en descente.

Ces systèmes utilisent un glisseur continu, de forme annulaire ou circulaire inséré sur l'ensemble des suspentes avec une surface de tissu générant une trainé aérodynamique.

Cette solution de glisseur continu à génération de trainée aérodynamique n'est néanmoins pas applicable aux largages à très basse altitude en raison d'une temporisation trop longue augmentant les temps d'épanouissements et entrainant des abaissements trop important, c'est-à-dire des pertes de hauteur trop importantes pendant la phase d'épanouissement.

D'autres systèmes permettent un freinage de l'épanouissement en utilisant un blocage mécanique ou un système pyrotechnique pour ralentir l'épanouissement, consistant par exemple en une drisse parcourant tout le bord d'attaque de la voile du parachute pour le resserrer et empêcher son épanouissement trop rapide, cette drisse devant néanmoins être libérée mécaniquement après quelques secondes.

Ces types de systèmes mécaniques ou à pyrotechnie ont de nombreuse contraintes : l'ajout de masse, la nécessité d'un montage complexe pour être initialisé au moment du largage, l'utilisation délicate de la pyrotechnie, et surtout un coût très important.

Les différents types de solutions connues sur le marché et présentés ci-dessus entrainent un fort ralentissement de l'ouverture ou une complexité de mise en œuvre les rendant incompatible avec les largages à très basse altitudes. Pour permettre ces largages à faible altitude, l'état de l'art montre que les parachutes ne sont pas équipés d'un dispositif présenté ci-dessus ce qui entraine de multiples brulures et déchirures de tissus, notamment de la voile et des suspentes, provoquées par un mauvais séquencement de la phase de déploiement, une cinématique aléatoire, trop rapide donc trop violente.

Elles ne donnent donc pas satisfaction et laissent subsister des inconvénients à résoudre qui sont d'autant plus fréquents lors de l'utilisation d'un « cluster » de parachutes regroupés pour le port d'une charge commune. US 7 000 872 B1 décrit un parachute circulaire comprenant une voilure de forme circulaire comportant une bande de jupe et une pluralité de suspentes principales en forme de Y reliées à la bande de jupe et qui convergent vers le bas vers une jonction de suspentes. Chaque suspente principale comprend un segment inférieur qui se divise en au moins deux segments supérieurs. Un dispositif de réduction généralement plan destiné à ralentir l'ouverture de la voilure définit une pluralité d'ouvertures à travers lesquelles s'étendent les suspentes principales. Le dispositif de réduction comprend une bande de matériau pliée en plusieurs segments de bande disposés en configuration en étoile à cinq branches. Des œillets en forme d'anneaux en laiton s'étendant à travers les jonctions des segments de bande forment des ouvertures destinées à recevoir les suspentes.

### Exposé de l'invention

L'invention a pour but de pallier au moins certains des inconvénients précités et de proposer un parachute capable de cumuler des avantages de rapidité, simplicité et fiabilité pour sa mise en œuvre, et ce même en utilisation en cluster et pour du largage à basse altitude.

Au vu de ce qui précède, l'invention a pour objet un parachute selon les revendications 1 ou 2.

Dans un autre mode de réalisation, les moyens d'attache comportent une sangle et les éléments de passage sont formés par des œillets traversant ladite sangle.

Avantageusement, le glisseur est en butée sur le bord d'attaque.

De préférence, la distance entre deux éléments de passage d'une même glissière est strictement inférieure à celle séparant les premières extrémités de deux suspentes au niveau du bord d'attaque.

Les glisseurs sont par exemple au nombre de trois, quatre ou cinq.

Le parachute peut prévoir en outre que les moyens d'attache soient en cordage ou en tissu.

De préférence, le parachute comporte un élévateur auquel sont reliées d'une part les deuxièmes extrémités des suspentes et d'autre part la charge.

L'invention concerne également un cluster de ces parachutes dans lequel les élévateurs respectifs sont reliés à une même charge.

### Brève description des dessins

L'invention sera mieux comprise à l'étude détaillée d'un mode de réalisation pris à titre d'exemple non limitatif et illustré par les dessins annexés, sur lesquels :
[Fig 1] représente un parachute comportant cinq glissières et en cours de remplissage pendant une descente, en vue de dessous.
[Fig 2] représente un cluster de trois parachutes pendant une descente, en vue de face.
[Fig 3] représente un premier mode de réalisation de la glissière.
[Fig 4] représente un deuxième mode de réalisation de la glissière.

### Description détaillée

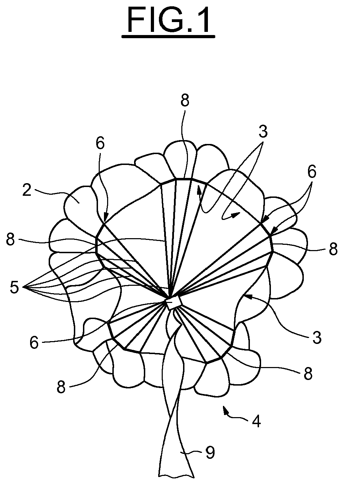

On se réfère à la figure 1 qui illustre un parachute 1 selon l'invention, qui comporte une voile 2 ayant un bord d'attaque 3 et un bord de fuite 4 qui est opposé au bord d'attaque 3.

Le bord d'attaque 3 est celui destiné à dévier l'air lors d'une descente avec le parachute 1, de manière à diriger l'air vers le centre de la voile 2 pour la déplier.

Un épanouissement trop rapide de la voile 2 peut avoir lieu en cas de prise de vitesse provoquant une arrivée d'air trop massive dans la voile 2 et entrainant une ouverture trop brutale de celle-ci, l'exposant un fort risque de déchirures.

Le parachute 1 comporte des suspentes 5 ayant chacune une première extrémité 6 accrochée au bord d'attaque 3 et une deuxième extrémité 7 destinée à porter une charge 10, qui peut être par exemple du matériel ou du personnel.

De préférence, le parachute 1 comporte un élévateur 9 à laquelle sont reliées d'une part les deuxièmes extrémités 7 des suspentes 5 et d'autre part la charge 10.

L'élévateur 9 permet de centrer la charge 10 à la verticale du centre de la voile 2 et de répartir de manière équilibrée les force de retenue exercées par les suspentes 5 sur la charge 10.

Le parachute 1 comporte également au moins deux glisseurs 8 comportant des éléments de passage de suspentes 12 reliés les uns aux autres par des moyens d'attache 11.

Chacun des éléments de passage 12 des glisseurs 8 est traversé par l'une des suspentes 5.

Chaque glisseur 8 est ainsi libre en translation par rapport à chacune des suspentes 5 qui traverse ses éléments de passage 12, sur lesquels le glisseur 8 peut glisser sous l'effet de la gravité et la force générée par l'écartement des suspentes.

Plus particulièrement, chaque glisseur 8 est adapté pour pouvoir glisser le long des suspentes 5 qui traversent les éléments de passage 12 depuis les premières extrémités 6 desdites suspentes 5 vers leurs deuxièmes extrémités 7 sous l'effet de la gravité et de la force générée par l'écartement des suspentes lorsque le parachute 1 engage une descente tendant les suspentes 5 sous l'effet d'un gonflement de la voile 2.

Le parachute 1 est ainsi dépourvu de toute toile ou voilure s'étendant à l'intérieur du volume formé les suspentes 5 sous la voile 2, comme c'est le cas dans différents parachutes à glisseurs à aérodynamisme de l'état de la technique.

La présence et le glissement des glisseurs 8 permettent de fiabiliser les épanouissements des voiles 2 des familles de parachutes citées précédemment en limitant les dégradations du tissu de la voile 2 et des suspentes 5.

Ils permettent également de réduire les chocs à l'épanouissement de la voile 2 lorsque les vitesses de largages sont élevées et de permettre d'atteindre une vitesse de descente stable plus rapidement, ce qui est particulièrement utile pour les largages en basse altitude, c'est-à-dire inférieurs à environ quatre-vingts mètres du sol.

Le glisseur 8 peut être en butée sur le bord d'attaque 3, comme c'est le cas sur la Figure 1.

Le glisseur 8 est notamment en butée sur le bord d'attaque 3 lorsqu'il est plié avant son utilisation, et dans les toutes premières phases de la descente lors d'un largage du parachute 1.

Le positionnement en butée d'une glissière donnée permet de bloquer le débattement de la portion de voile 2 dont les suspentes 5 sont reliées à cette glissière 8, durant les premières secondes de la phase d'épanouissement, ce qui diminue la prise à l'air du bord d'attaque 6 et donc ralentit l'épanouissement de cette portion de la voile 2, et ainsi diminue le choc à l'épanouissement de la voile 2 susceptible d'entraîner des déchirements de celle-ci ou son retournement en papillon dans le cas d'une ouverture non séquencée.

La voile 2 est classiquement divisée en fuseaux 14, et le nombre de fuseaux 14 est égal au nombre de suspentes 5.

Par « fuseau », on entend un élément du parachute 1 sur lequel on attache les suspentes et constitué d'une ou plusieurs pièces assemblées qui permettent au parachute 1 d'avoir un bord d'attaque 3 et un bord de fuite 4.

Le nombre de glisseurs 8 est avantageusement compris entre quinze et vingt-cinq pourcents du nombre de fuseaux 14.

En effet, les essais d'un glisseur annulaire, c'est-à-dire un glisseur unique comme dans l'art antérieur, et d'un glisseur annulaire divisé en deux, ont montré leur capacité à fortement temporiser l'épanouissement de la voile au point de l'empêcher complètement, entraînant une non-ouverture de la voile et un impact de la charge au sol.

Pour ces essais, même si l'épanouissement aurait pu arriver à terme si l'altitude de largage était plus haute, ils démontrent l'insuffisance de deux glisseurs pour des largages à basse altitude.

Les essais en divisant le glisseur en trois, quatre et cinq portions ont permis de parfaitement temporiser l'épanouissement, à l'inverse des parachutes à glisseur à génération de trainée aérodynamique, annulaire ou circulaire de l'art antérieur qui ne sont pas adaptés aux largages basse altitude.

Le fait d'avoir ces nombres de portions libère les contraintes sur le bord d'attaque 3 situé entre 2 glisseurs et permet au flux d'air de remplir progressivement la voile 2 lors de la descente et d'épanouir le parachute 1 avec une perte de hauteur raisonnable pour de la basse altitude.

Le parachute 1 est ainsi formé d'au moins deux glisseurs 8, avec chacun des glisseurs 8 qui relient plusieurs suspentes 5, et le nombre de glisseurs correspond avantageusement à quinze à vingt-cinq pourcents du nombre de fuseaux 14.

Dans l'exemple explicité, le nombre de glisseurs 8 est idéalement de trois.

Les glisseurs 8 sont ainsi placés sur les suspentes 5 de manière à former une segmentation alternant des zones pourvues de glisseurs 8 et de zones dépourvues de glisseurs 8.

Les glisseurs 8 peuvent en outre être installés en butée contre le bord d'attaque 3.

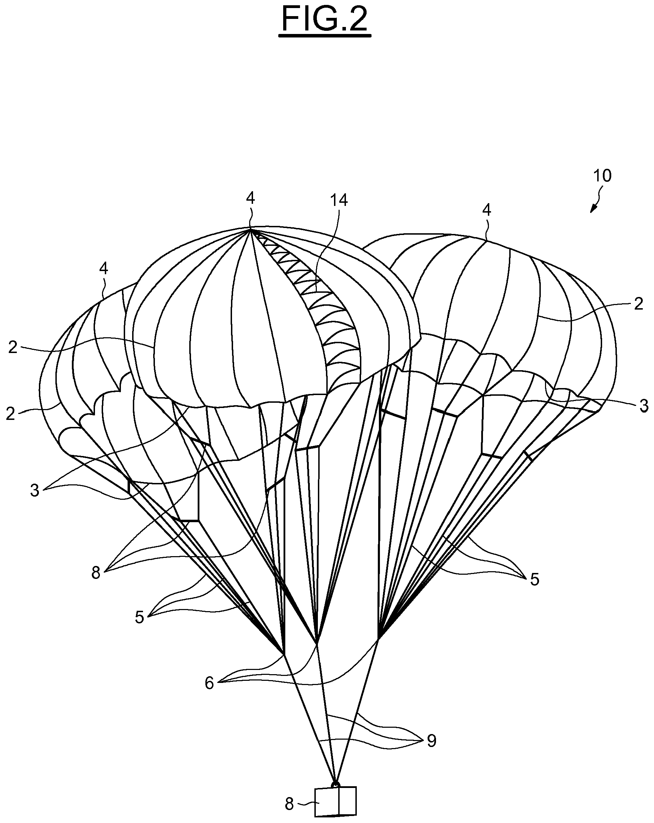

L'invention concerne également un cluster, ou groupement, de parachutes 13 tel qu'illustré par la Figure 2.

Le cluster de parachutes 13 comporte plusieurs parachutes 1 communalisés pour le port d'une même charge 10.

Chacun des élévateurs 9 respectifs des parachutes 1 sont donc reliées à la charge 10 commune.

Plus le nombre de glisseurs 8 est important, moins l'épanouissement du parachute 1 ou du cluster 13 est temporisé.

Moins il y a de glisseurs 8 et plus les éléments de passage 12 sont proches, et plus l'épanouissement est long, car cette configuration contraint fortement l'épanouissement des voiles 2.

En conséquence, il y a un faible risque de dégradation en cas d'emploi de plusieurs voiles 2 dans un cluster 13, mais les temps d'épanouissement ne sont pas compatibles avec un largage à basse altitude.

A l'inverse plus le nombre de glisseurs 8 est important, et plus les éléments de passage 12 sont éloignés, alors moins la voile 2 est contrainte, et plus rapide est son épanouissement.

En conséquence, lors d'une ouverture dans une position proche de l'horizontale et/ou en flux perturbé, l'épanouissement se produit trop rapidement et le séquencement entre plusieurs voiles 2 est non maitrisé, pouvant engendrer des dégradations.

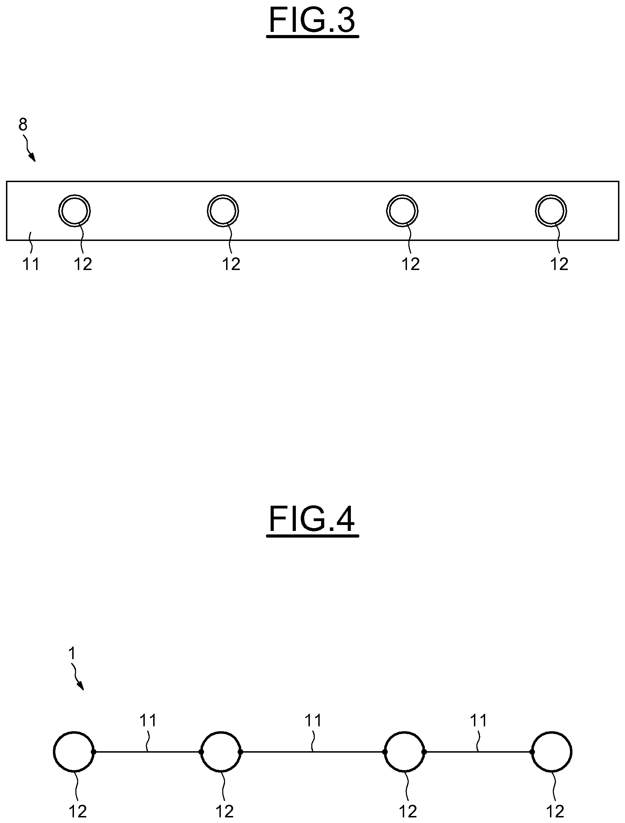

Les nombres optimums de glisseurs 8 est donc entre quinze et vingt-cinq pourcents du nombre de fuseaux 14. Les Figures 3 et 4 illustrent deux modes de réalisation des glisseurs 8.

Dans le premier mode de réalisation illustré par la Figure 3, les moyens d'attache 11 comportent une sangle et les éléments de passage 12 sont formés par des œillets traversant ladite sangle.

Dans le deuxième mode de réalisation illustré par la Figure 4, les éléments de passage 12 sont formés d'anneaux et les moyens d'attache 11 comportent des drisses reliant chacune deux anneaux successifs.

La distance entre deux éléments de passage 12 d'une même glissière 8 est par exemple strictement inférieure à celle séparant les premières extrémités 6 de deux suspentes 5 au niveau du bord d'attaque 3.

Le nombre de glisseur 8 et la distance entre ces éléments 12 sont dépendants des objectifs de temporisation recherchée pour chaque parachute 1.

Un écartement assez court entre chaque élément 12 permet de tendre le bord d'attaque 3 de la portion située entre deux glisseurs 8, et cette tension permet au parachute 1 de se remplir par le centre, et d'être ainsi solide et stable durant son épanouissement.

Le nombre d'éléments de passage est dépendant du nombre de suspentes.

En fonction de la taille du parachute 1 et des conditions d'épanouissements (basse altitude pour du largage cargo, ou haute altitude pour le spatial) le nombre de glisseurs 8 et la distance entre les éléments de passage 12 diffère.

En basse altitude il est souhaité de ne pas augmenter les temps d'épanouissement de voiles 2, et de seulement limiter les dégradations.

Le parachute 1 peut prévoir en outre que les moyens d'attache 11 soient en cordage ou en sangle ou en tissu.

Les éléments de passage 12 sont dans un matériau qui apporte une résistance mécanique importante et une friction adéquate des glissières le long des suspentes 5, par exemple en plastique.

L'utilisation de lanière ou de drisses combinée à des éléments de passage 12 à anneaux métalliques ou à œillets métalliques, permet de conserver la possibilité de pliage des glisseurs 8, et donc de l'intégralité du parachute 1, sans risque de détériorer la voile 2 avec les éléments de passage 12.

On réalise ainsi un parachute 1 qui permet que, lors de la phase d'épanouissement, les glisseurs 8 maintiennent groupées les suspentes 5 et contraignent le bord d'attaque 3, freinant ainsi l'épanouissement de la voile 2 puisque celui-ci se produit par le remplissage progressif et central du volume d'air de la voile 2 et non plus, comme dans l'art antérieur, par l'épanouissement aléatoire du bord d'attaque 3 soumis au flux d'air perturbé.

Cette brève temporisation d'épanouissement permet au parachute 1 d'avoir juste le temps de se rapprocher de sa position verticale durant la phase de gonflement, assurant un épanouissement dans les meilleures conditions de flux d'air, puisqu'à la différence des glisseurs habituellement utilisés sur les parachutes, ceux de l'invention n'ont pas d'action aérodynamique mais uniquement mécanique en utilisant la friction des suspentes dans les œillets ou anneaux.

## Revendications

1. Parachute (1) comportant une voile (2) ayant un bord d'attaque (3) et un bord de fuite (4) qui est opposé au bord d'attaque (3), des suspentes (5) ayant chacune une première extrémité (6) accrochée au bord d'attaque (3) et une deuxième extrémité (7) destinée à porter une charge (10), et au moins un glisseur (8) comportant des éléments de passage de suspentes (12) reliés les uns aux autres par des moyens d'attache (11), lesdits éléments de passage (12) étant traversés chacun par l'une des suspentes (5) et libres en translation par rapport à celle-ci, le glisseur (8) étant adapté pour pouvoir glisser le long des suspentes (5) qui traversent les éléments de passage (12) dans le sens des premières extrémités (6) desdites suspentes vers leurs deuxièmes extrémités (7) lorsque le parachute (1) engage une descente tendant et écartant les suspentes (5) sous l'effet d'un gonflement de la voile (2), **caractérisé en ce que** la voile (2) comporte des fuseaux (14) et le nombre de glisseurs (8) est supérieur ou égal à deux, les moyens d'attache de chaque glisseur (8) étant formés d'une sangle, chaque glisseur (8) étant adapté pour pouvoir glisser le long des suspentes (5) qui traversent les éléments de passage (12) depuis les premières extrémités (6) desdites suspentes (5) vers leurs deuxièmes extrémités (7) sous l'effet de la gravité et de la force générée par l'écartement des suspentes lorsque le parachute (1) engage une descente tendant les suspentes (5) sous l'effet d'un gonflement de la voile (2), chaque glisseur (8) étant libre en translation par rapport à chacune des suspentes (5) qui traverse ses éléments de passage (12).

2. Parachute (1) comportant une voile (2) ayant un bord d' attaque (3) et un bord de fuite (4) qui est opposé au bord d' attaque (3), des suspentes (5) ayant chacune une première extrémité (6) accrochée au bord d' attaque (3) et une deuxième extrémité (7) destinée à porter une charge (10), et au moins un glisseur (8) comportant des éléments de passage de suspentes (12) reliés les uns aux autres par des moyens d' attache (11), lesdits éléments de passage (12) étant traversés chacun par l'une des suspentes (5) et libres en translation par rapport à celle-ci, le glisseur (8) étant adapté pour pouvoir glisser le long des suspentes (5) qui traversent les éléments de passage (12) dans le sens des premières extrémités (6) desdites suspentes vers leurs deuxièmes extrémités (7) lorsque le parachute (1) engage une descente tendant et écartant les suspentes (5) sous l'effet d'un gonflement de la voile (2), **caractérisé en ce que** la voile (2) comporte des fuseaux (14) et le nombre de glisseurs (8) est supérieur ou égal à deux, chaque glisseur (8) étant formé d'anneaux formant les éléments de passage et les moyens d'attache (11) comportent des drisses reliant chacune deux anneaux successifs; chaque glisseur (8) étant adapté pour pouvoir glisser le long des suspentes (5) qui traversent les éléments de passage ( 12) depuis les premières extrémités (6) desdites suspentes (5) vers leurs deuxièmes extrémités (7) sous l' effet de la gravité et de la force générée par l' écartement des suspentes lorsque le parachute (1) engage une descente tendant les suspentes (5) sous l' effet d'un gonflement de la voile (2), chaque glisseur (8) étant libre en translation par rapport à chacune des suspentes (5) qui traverse ses éléments de passage (12).

3. Parachute (1) selon la revendication 1, dans lequel les éléments de passage (12) sont formés par des œillets traversant ladite sangle.

4. Parachute (1) selon l'une quelconque des revendications précédentes, dans lequel le glisseur (8) est en butée sur le bord d'attaque (3).

5. Parachute (1) selon l'une quelconque des revendications précédentes, dans lequel la distance entre deux éléments de passage (12) d'une même glissière (8) est strictement inférieure à celle séparant les premières extrémités (6) de deux suspentes (5) au niveau du bord d'attaque (3).

6. Parachute (1) selon l'une quelconque des revendications 1 à 5, dans lequel la voile (2) comporte des fuseaux (14) et le nombre de glisseurs (8) correspond à quinze à vingt-cinq pourcents du nombre de fuseaux (14).

7. Parachute (1) selon l'une quelconque des revendications 1 à 6, dans lequel les moyens d'attache (11) sont en cordage ou en tissu

8. Parachute (1) selon l'une quelconque des revendications 1 à 7, comportant en outre un élévateur (9) auquel sont reliées d'une part les deuxième extrémités (7) des suspentes (5) et d'autre part la charge (10).

9. Cluster de parachutes (13) comportant plusieurs parachutes (1) selon la revendication 8 dont les élévateurs (9) respectifs sont reliées à une même charge (10).

## Patentansprüche

1. Fallschirm (1), umfassend eine Kappe (2), die eine Vorderkante (3) und eine Hinterkante (4) aufweist, die der Vorderkante (3) gegenüberliegt, Fangleinen (5), die jeweils ein erstes Ende (6) aufweisen, das an der Vorderkante (3) angehängt ist, und ein zweites Ende (7), das eine Last (10) tragen soll, und mindestens einen Gleiter (8), der Elemente für die Durchführung von Fangleinen (12) umfasst, die durch Befestigungsmittel (11) miteinander verbunden sind, wobei die Durchführungselemente (12) jeweils von einer der Fangleinen (5) durchquert werden und in Bezug auf diesem frei verschiebbar sind, wobei der Gleiter (8) so ausgelegt ist, dass er entlang der Fangleinen (5) gleiten kann, die die Durchführungselemente (12) in Richtung der ersten Enden (6) der Fangleinen zu ihren zweiten Enden (7) durchqueren, wenn der Fallschirm (1) unter Wirkung eines Aufblähens der Kappe (2) einen Sinkflug einleitet, der die Fangleinen (5) spannt und auseinanderzieht, **dadurch gekennzeichnet, dass** die Kappe (2) Bahnsegmente (14) umfasst und die Anzahl der Gleiter (8) größer oder gleich zwei ist, wobei die Befestigungsmittel jedes Gleiters (8) aus einem Gurtband bestehen, das so ausgelegt ist, dass es entlang der Fangleinen (5), die die Durchführungselemente (12) durchqueren, von den ersten Enden (6) der Fangleinen (5) zu ihren zweiten Enden (7) unter der Wirkung der Schwerkraft und der Kraft, die durch das Auseinanderziehen der Fangleinen erzeugt wird, gleiten kann, wenn der Fallschirm (1) einen Sinkflug einleitet, der die Fangleinen (5) unter der Wirkung eines Aufblähens der Kappe (2) spannt, wobei jeder Gleiter (8) in Bezug auf jede der Fangleinen (5), die seine Durchführungselemente (12) durchqueren, frei verschiebbar ist.

2. Fallschirm (1), umfassend eine Kappe (2), die eine Vorderkante (3) und eine Hinterkante (4) aufweist, die der Vorderkante (3) gegenüberliegt, Fangleinen (5), die jeweils ein erstes Ende (6) aufweisen, das an der Vorderkante (3) angehängt ist, und ein zweites Ende (7), das eine Last (10) tragen soll, und mindestens einen Gleiter (8), der Elemente für die Durchführung von Fangleinen (12) umfasst, die durch Befestigungsmittel (1) miteinander verbunden sind, wobei die Durchführungselemente (12) jeweils von einer der Fangleinen (5) durchquert werden und in Bezug auf diesem frei verschiebbar sind, wobei der Gleiter (8) so ausgelegt ist, dass er entlang der Fangleinen (5) gleiten kann, die die Durchführungselemente (12) in Richtung der ersten Enden (6) der Fangleinen zu ihren zweiten Enden (7) durchqueren, wenn der Fallschirm (1) unter Wirkung eines Aufblähens der Kappe (2) einen Sinkflug einleitet, der die Fangleinen (5) spannt und auseinanderzieht, **dadurch gekennzeichnet, dass** die Kappe (2) Bahnsegmente (14) umfasst und die Anzahl der Gleiter (8) größer oder gleich zwei ist, wobei jeder Gleiter (8) aus Ringen ausgebildet ist, die die Durchführungselemente bilden, und die Befestigungsmittel (11) Leinen umfassen, die jeweils zwei aufeinanderfolgende Ringe verbinden; wobei jeder Gleiter (8) so ausgelegt ist, dass er entlang der Fangleinen (5), die die Durchführungselemente (12) durchqueren, von den ersten Enden (6) der Fangleinen (5) zu ihren zweiten Enden (7) unter der Wirkung der Schwerkraft und der Kraft, die durch das Auseinanderziehen der Fangleinen erzeugt wird, gleiten kann, wenn der Fallschirm (1) einen Sinkflug einleitet, der die Fangleinen (5) unter der Wirkung eines Aufblähens der Kappe (2) spannt, wobei jeder Gleiter (8) in Bezug auf jede der Fangleinen (5), die seine Durchführungselemente (12) durchqueren, frei verschiebbar ist.

3. Fallschirm (1) nach Anspruch 1, die Durchführungselemente (12) sind durch Ösen gebildet, die das Gurtband durchqueren.

4. Fallschirm (1) nach einem der vorhergehenden Ansprüche, wobei der Gleiter (8) an der Vorderkante (3) anliegt.

5. Fallschirm (1) nach einem der vorhergehenden Ansprüche, wobei der Abstand zwischen zwei Durchführungselementen (12) desselben Gleiters (8) strikt kleiner ist als der Abstand, der die ersten Enden (6) von zwei Fangleinen (5) an der Vorderkante (3) trennt.

6. Fallschirm (1) nach einem der Ansprüche 1 bis 5, wobei die Kappe (2) Bahnsegmente (14) umfasst und die Anzahl der Gleiter (8) fünfzehn bis fünfundzwanzig Prozent der Anzahl der Bahnsegmente (14) entspricht.

7. Fallschirm (1) nach einem der Ansprüche 1 bis 6, wobei die Befestigungsmittel (11) aus Seil oder Stoff bestehen.

8. Fallschirm (1) nach einem der Ansprüche 1 bis 7, ferner umfassend einen Tragegurt (9), mit dem einerseits die zweiten Enden (7) der Fangleinen (5) und andererseits die Last (10) verbunden sind.

9. Fallschirm-Cluster (13) mit mehreren Fallschirmen (1) nach Anspruch 8, deren jeweilige Tragegurte (9) mit derselben Last (10) verbunden sind.

## Claims

1. A parachute (1) including a canopy (2) having a leading edge (3) and a trailing edge (4) which is opposite the leading edge (3), suspension lines (5) each having a first end (6) attached to the leading edge (3) and a second end (7) designed to bear a load (10), and at least one slider (8) having through-elements (12) for the suspension lines to pass through, said elements being connected to one another by attachment means (11), each of said through-elements (12) being passed through by one of the suspension lines (5) and being free to move in translation relative thereto, the slider (8) being designed to slide along the suspension lines (5) that pass through the through-elements (12) in the direction from the first ends (6) of said suspension lines towards their second ends (7) when the parachute (1) starts a descent, tightening and spreading apart the suspension lines (5) under the effect of inflating the canopy (2), **characterised in that** the canopy (2) has sections (14) and the number of sliders (8) is greater than or equal to two, the attachment means of each slider (8) being formed by a strap , each slider (8) being designed to slide along the suspension lines (5) that pass through the through-element (12) from the first ends (6) of said suspension lines (5) towards their second ends (7) under the effect of gravity and the force generated by the suspension lines spreading apart when the parachute (1) starts a descent, tightening the suspension lines (5) under the effect of inflating the canopy (2), each slider (8) being free to move in translation relative to each of the suspension lines (5) which passes through its through-elements (12).

2. A parachute (1) including a canopy (2) having a leading edge (3) and a trailing edge (4) which is opposite the leading edge (3), suspension lines (5) each having a first end (6) attached to the leading edge (3) and a second end (7) designed to bear a load (10), and at least one slider (8) having through-elements (12) for the suspension lines to pass through, said elements being connected to one another by attachment means (11), each of said through-elements (12) being passed through by one of the suspension lines (5) and being free to move in translation relative thereto, the slider (8) being designed to be able to slide along the suspension lines (5) that pass through the through-elements (12) in the direction from the first ends (6) of said suspension lines towards their second ends (7) when the parachute (1) starts a descent, tightening and spreading apart the suspension lines (5) under the effect of inflating the canopy (2), **characterised in that** the canopy (2) has sections (14) and the number of sliders (8) is greater than or equal to two, each slider (8) being formed by rings forming the through-elements and the attachment means (11) include rigging lines each connecting two successive rings; each slider (8) being designed to slide along the suspension lines (5) that pass through the through-element (12) from the first ends (6) of said suspension lines (5) towards their second ends (7) under the effect of gravity and the force generated by the suspension lines spreading apart when the parachute (1) starts a descent, tightening the suspension lines (5) under the effect of inflating the canopy (2), each slider (8) being free to move in translation relative to each of the suspension lines (5) which pass through its through-elements (12).

3. The parachute (1) according to claim 1, wherein the through-elements (12) are formed by eyelets passing through said strap.

4. The parachute (1) according to any of the preceding claims, wherein the slider (8) is in abutment with the leading edge (3).

5. The parachute (1) according to any of the preceding claims, wherein the distance between two through-elements (12) of a same slider (8) is strictly less than that separating the first ends (6) of two suspension lines (5) at the leading edge (3).

6. The parachute (1) according to any of Claims 1 to 5, wherein the canopy (2) has sections (14) and the number of sliders (8) corresponds to fifteen to twenty-five percent of the number of sections (14).

7. The parachute (1) according to any of Claims 1 to 6, wherein the attachment means (11) are made of rope or fabric.

8. The parachute (1) according to any of Claims 1 to 7, further including a riser (9) to which on the one hand the second ends (7) of the suspension lines (5) and on the other hand the load (10) are connected.

9. A parachute cluster (13) including a plurality of parachutes (1) according to Claim 8, the respective risers (9) of which are connected to a same load (10).
